(19) Europäisches Patentamt / European Patent Office / Office européen des brevets

(11) **EP 4 723 220 A1**

(12) **EUROPEAN PATENT APPLICATION**
published in accordance with Art. 153(4) EPC

(43) Date of publication:
08.04.2026 Bulletin 2026/15

(21) Application number: 24814976.7

(22) Date of filing: 05.04.2024

(51) International Patent Classification (IPC):
$H01M\ 4/48$ (2010.01)    $H01M\ 4/36$ (2006.01)
$H01M\ 4/62$ (2006.01)

(52) Cooperative Patent Classification (CPC):
Y02E 60/10

(86) International application number:
PCT/JP2024/014105

(87) International publication number:
WO 2024/247489 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2023 JP 2023090218

(71) Applicant: Panasonic Intellectual Property
Management Co., Ltd.
Kadoma-shi, Osaka 571-0057 (JP)

(72) Inventors:
• MATSUBARA, Kenji
Osaka 571-0057 (JP)
• TAKEZAWA, Hideharu
Osaka 471-0057 (JP)

(74) Representative: Eisenführ Speiser
Patentanwälte Rechtsanwälte PartGmbB
Postfach 10 60 78
28060 Bremen (DE)

(54) **ELECTRODE ACTIVE MATERIAL, ELECTRODE, AND BATTERY**

(57) An electrode active material (10) of the present disclosure includes an oxide particle (1) containing titanium and not containing lithium, and a carbon material (2). The oxide particle (1) has a plurality of pores (11) having an average pore diameter (S) of 50 nm or more and 200 nm or less. The carbon material (2) exists inside the pores (11). An electrode (100) of the present disclosure includes the electrode active material (10) and a solid electrolyte (20) in contact with the electrode active material (10). A battery (1000) of the present disclosure includes a positive electrode (200), a negative electrode (300), and an electrolyte layer (400) placed between the positive electrode (200) and the negative electrode (300). The positive electrode (200) or the negative electrode (300) includes the electrode (100).

FIG. 1

## Description

TECHNICAL FIELD

The present disclosure relates to an electrode active material, an electrode, and a battery.

BACKGROUND ART

Research and development of solid-state batteries as next-generation batteries is being actively conducted. One of the issues with solid-state batteries is that electrodes thereof have high resistance and thus the battery capacity cannot be fully utilized. Therefore, there is a need to reduce the resistance of the electrodes. In order to reduce the resistance of the electrodes, it is important to form a good interface between a solid electrolyte and an electrode active material. For example, a sintered body of the solid electrolyte and the electrode active material is likely to form a good interface between the solid electrolyte and the electrode active material, and thus is suitable for an electrode of a solid-state battery.

Patent Literature 1 discloses an electrode active material for a lithium secondary battery, which contains secondary particles each composed of an aggregation of primary particles of anatase-type or rutile-type titanium dioxide and in which the secondary particles each have a void amount in the range of 0.005 to 1.0 cm$^3$/g. According to the pore distribution of Patent Literature 1 (FIG. 5), the pore diameters of the secondary particles of Examples are about 10 nm or less.

CITATION LIST

Patent Literature

Patent Literature 1: JP 5400607 B

SUMMARY OF INVENTION

Technical Problem

In the conventional art, it is desired to improve the initial discharge capacity of a battery while maintaining the sinterability of an electrode.

Solution to Problem

The present disclosure provides an electrode active material including:

an oxide particle containing titanium and not containing lithium; and
a carbon material, wherein
the oxide particle has a plurality of pores having an average pore diameter of 50 nm or more and 200 nm or less, and
the carbon material exists inside the pores.

Advantageous Effects of Invention

According to the present disclosure, it is possible to improve the initial discharge capacity of a battery while maintaining the sinterability of an electrode.

BRIEF DESCRIPTION OF THE DRAWINGS

FIG. 1 is a cross-sectional view showing a schematic configuration of an electrode active material according to a first embodiment.
FIG. 2 is a cross-sectional view showing a schematic configuration of an oxide particle according to the first embodiment.
FIG. 3 is an SEM image (30000 times) showing an example of a cross-section of the electrode active material according to the first embodiment.
FIG. 4 is an SEM image (20000 times) showing a part of a cross-section of the oxide particle according to the first embodiment.

FIG. 5 is a cross-sectional view showing a schematic configuration of an electrode according to a second embodiment.

FIG. 6 is a cross-sectional view showing a schematic configuration of a battery according to a third embodiment.

FIG. 7 shows a Raman spectrum of an electrode active material of Example 3.

FIG. 8 shows the charge/discharge curves for the first cycle of negative electrode half cells of Examples 1 to 3 and Reference Example 1.

FIG. 9 shows the charge/discharge curve for the first cycle of a negative electrode half cell of Example 4.

FIG. 10 shows the charge/discharge curve for the first cycle of a negative electrode half cell of Example 5.

FIG. 11 shows the charge/discharge curve for the first cycle of a negative electrode half cell of Example 6.

FIG. 12 shows the charge/discharge curve for the first cycle of a negative electrode half cell of Reference Example 2.

FIG. 13 shows the charge/discharge curve for the first cycle of a negative electrode half cell of Reference Example 5.

FIG. 14 is a graph showing the relationship between the cycle number and the charge capacity of each of the negative electrode half cells of Examples 1 and 2. In the negative electrode half cell, the side where Li is released corresponds to charging (discharging in the battery).

FIG. 15 is a graph showing the relationship between the cycle number and the capacity retention rate of each of the negative electrode half cells of Examples 1 and 2.

DESCRIPTION OF EMBODIMENTS

(Findings on which the present disclosure is based)

The present inventors have examined the use of an oxide containing titanium as an electrode active material. The oxide containing titanium is considered to be promising as an electrode active material for solid-state batteries since the oxide has the advantages of being able to be mass-produced inexpensively, having excellent charge/discharge characteristics, and having high safety.

As oxides containing titanium, for example, oxides that are used in liquid batteries in each of which an electrolytic solution is used are known. Oxides for this application are produced, for example, by granulating primary particles into secondary particles. In a liquid battery, an ion conduction path is formed when an electrolytic solution enters the pores of secondary particles. The pore diameters of the pores of the oxide secondary particles used in liquid batteries are normally as small as about 10 nm. This is because if the pore diameters are excessively large, the volume ratio of an electrode active material in the battery decreases and the capacity of the battery decreases. However, according to the examination by the present inventors, when such oxide particles are used in a solid-state battery, good electron conduction paths are not formed inside the oxide particles, and electron-conducting properties decrease. As a result, it has been confirmed that the initial discharge capacity of the battery decreases.

The present inventors have intensively studied oxides containing titanium which are suitable for improving the initial discharge capacity of a battery while maintaining the sinterability of an electrode, and have arrived at the present invention.

Hereinafter, embodiments of the present disclosure will be described with reference to the drawings. The present disclosure is not limited to the embodiments described below.

(First embodiment)

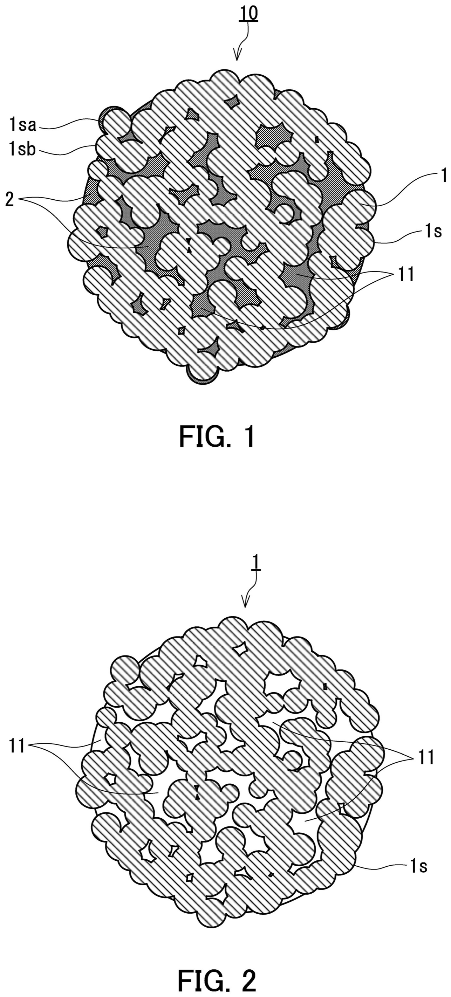

FIG. 1 is a cross-sectional view showing a schematic configuration of an electrode active material 10 according to a first embodiment. FIG. 2 is a cross-sectional view showing a schematic configuration of an oxide particle 1 according to the first embodiment. The electrode active material 10 is used, for example, for the positive electrode or the negative electrode of a solid-state battery. The positive electrode or the negative electrode of the solid-state battery is produced, for example, by firing a molded body of a powder material including powder of a solid electrolyte and powder of the electrode active material 10.

In the present description, "sintering" refers to a phenomenon in which bonding occurs between particles when the molded body of the powder material is heated, and the molded body becomes densified along with volume shrinkage. "Firing" refers to heat treatment for sintering.

In the present embodiment, the electrode active material 10 includes the oxide particle 1 containing titanium and not containing lithium, and a carbon material 2. In the electrode active material 10, the oxide particle 1 has a plurality of pores 11 having an average pore diameter $S$ of 50 nm or more and 200 nm or less. In the case of using a sintered electrode as in an oxide all-solid-state battery, structural destruction due to expansion and contraction of the electrode active material is a problem. However, the above structural destruction can be mitigated by using the electrode active material 10 according to the present embodiment as an electrode active material.

The oxide particle 1 is a material having the ability to occlude and release metal ions such as lithium ions. The oxide particle 1 can function as an active material. The carbon material 2 has electron-conducting properties. The carbon material 2 exists inside the pores 11 of the oxide particle 1. With such a structure, many electron conduction paths are formed between the oxide particle 1 and the carbon material 2. Accordingly, electrons can be transported to the interiors of the pores 11 of the oxide particle 1, so that the electron-conducting properties of the electrode active material 10 are improved. As a result, the initial discharge capacity of the battery is improved. In addition, since the carbon material 2 is placed inside the pores 11 of the oxide particle 1, the amount of a carbon-based conductive agent kneaded with the electrode active material 10 at the stage of molding the electrode can be reduced. Therefore, the carbon-based conductive agent is less likely to enter between the particles of the solid electrolyte and thus does not become a factor that impairs the sinterability between the particles of the solid electrolyte. That is, with the electrode active material 10 according to the present embodiment, the sinterability between the particles of the solid electrolyte can be improved, and the sinterability of the electrode can be improved. Therefore, a good contact interface is easily formed between the electrode active material 10 and the solid electrolyte.

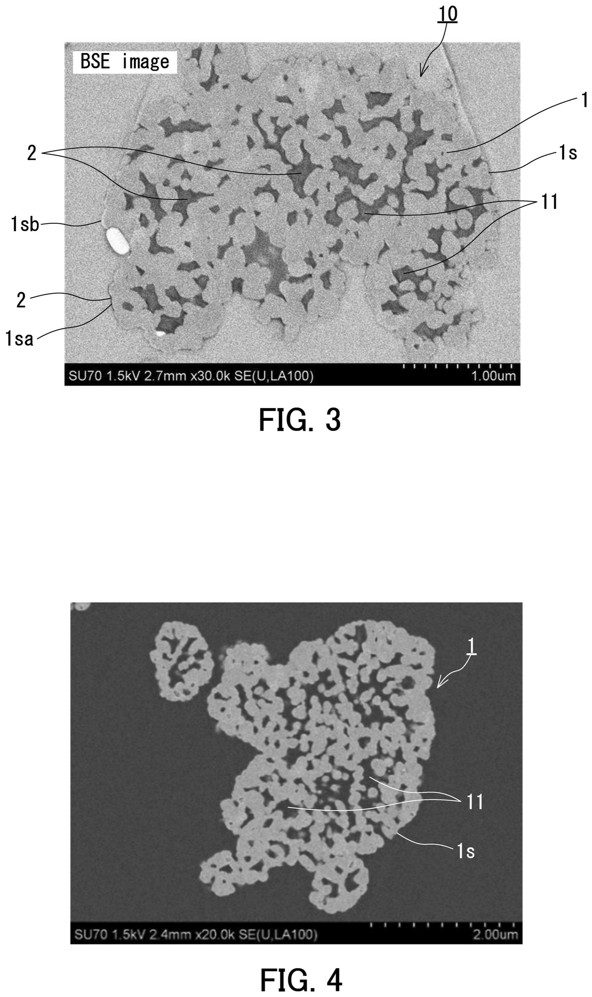

The fact that the oxide particle 1 has the plurality of pores 11 and the carbon material 2 exists inside the pores 11 in the electrode active material 10 can be confirmed, for example, by observing a cross-section of the electrode active material 10 with a scanning electron microscope (SEM). FIG. 3 is an SEM image (30000 times) showing an example of a cross-section of the electrode active material 10. FIG. 3 is an example of an SEM image of a cross-section of an electrode active material of Example 3 described later. The SEM image of the cross-section in FIG. 3 is an image observed after the electrode active material 10 is embedded in a resin and the cross-section of the electrode active material 10 is exposed by performing polishing processing. In order to clarify the existence state of the carbon material 2, observation is made after making it possible to distinguish the carbon material 2 from the resin by contrast difference. Therefore, in the SEM image in FIG. 3, the dark region represents the carbon material 2 existing inside the pores 11. FIG. 4 is an SEM image (20000 times) showing an example of a cross-section of the oxide particle 1. The SEM image of the cross-section in FIG. 4 is an image observed in a manner that emphasizes the clarity of the image, after the oxide particle 1 is embedded in a resin and the cross-section of the oxide particle 1 is exposed by performing polishing processing as in FIG. 3. In the SEM image in FIG. 4, the dark region represents the pores 11. As shown in FIG. 4, the oxide particle 1 has a plurality of pores 11. As shown in FIG. 3, the carbon material 2 exists inside the pores 11 of the oxide particle 1. More specifically, the carbon material 2 exists so as to cover the inner surfaces of the pores 11. The carbon material 2 may exist so as to cover a part of the inner surface of each pore 11.

The carbon material 2 may not necessarily exist in all of the interiors of the plurality of pores 11. The plurality of pores 11 may include pores 11 in which the carbon material 2 does not exist.

In the present embodiment, the average pore diameter S of the plurality of pores 11 in the electrode active material 10 is 50 nm or more and 200 nm or less. The average pore diameter S may be 60 nm or more and 190 nm or less, or may be 70 nm or more and 180 nm or less. With such a structure, structural destruction due to expansion and contraction of the electrode active material 10 is easily mitigated.

The lower limit of the average pore diameter S may be 80 nm, 90 nm, or even 100 nm. With such a structure, structural destruction due to expansion and contraction of the electrode active material 10 is easily mitigated.

The upper limit of the average pore diameter S may be 170 nm, 160 nm, or even 150 nm. With such a structure, a decrease in the volume ratio of the electrode active material 10 in the battery is suppressed, so that a decrease in the capacity of the battery is easily suppressed.

The average pore diameter S of the pores 11 in the electrode active material 10 can be obtained, for example, by a mercury intrusion method.

In the mercury intrusion method, first, high-pressure mercury is injected into a sample having pores. A pore distribution can be obtained from the relationship between the pressure applied to mercury and the amount of mercury injected into the sample. The pore distribution can be measured, for example, using a mercury porosimeter. Specifically, a diameter D of the pores into which mercury has been injected in the sample can be obtained from the following relational expression (I). In the relational expression (I), $\gamma$ denotes the surface tension of mercury, $\theta$ denotes the contact angle between mercury and the wall of the sample, and P denotes the pressure applied to mercury.

$$D = -4\gamma\cos\theta \div P \qquad (I)$$

The amount of mercury injected is measured for each pressure P by changing the pressure P step by step. The amount of mercury injected can be regarded as the cumulative value of the volume of the pores up to a diameter D corresponding to a specific pressure P. Accordingly, for each diameter D, a pore distribution in which the volume of the pores is specified can be obtained. The pore distribution is a graph showing, for example, the relationship between the diameter D of the pores and a Log differentiation pore volume.

The average pore diameter S (median diameter) of the plurality of pores 11 in the electrode active material 10 can be calculated from the pore distribution obtained for the electrode active material 10. At this time, voids observed other than the intraparticle voids of the electrode active material 10, that is, pores associated with the interparticle voids, are excluded. The confirmation of the intraparticle voids and the interparticle voids can be made by observation of a cross-section of the particles of the electrode active material 10 with an SEM.

The carbon material 2 may cover a part of an outer surface 1s of the oxide particle 1. As shown in FIG. 1 and FIG. 3, the oxide particle 1 may have an outer surface 1sa covered with the carbon material 2 and an outer surface 1sb not covered with the carbon material 2. As shown in FIG. 1 and FIG. 3, in the cross-section of the electrode active material 10, the length of the outer surface 1sa covered with the carbon material 2 may be smaller than the length of the outer surface 1sb not covered with the carbon material 2. With such a structure, the carbon material 2 is less likely to become a factor that impairs the sinterability between the electrode active material 10 and the particles of the solid electrolyte at the stage of molding the electrode. As a result, deterioration of the sinterability of the electrode is suppressed. In addition, transport of ions between the electrode active material 10 and the solid electrolyte is promoted, so that ion resistance at the contact interface between the electrode active material 10 and the solid electrolyte can be reduced. The length of the outer surface 1sa covered with the carbon material 2 and the length of the outer surface 1sb not covered with the carbon material 2 can be obtained, for example, from the SEM image of the cross-section of the electrode active material 10.

As shown in FIG. 1 and FIG. 3, in the cross-section of the electrode active material 10, the area occupied by the carbon material 2 existing inside the pores 11 may be larger than the area occupied by the carbon material 2 covering the outer surface 1s of the pores 11. With such a structure, the electron-conducting properties of the electrode active material 10 can be improved, and deterioration of the sinterability of the electrode can also be suppressed at the stage of molding the electrode. The area occupied by the carbon material 2 existing inside the pores 11 and the area occupied by the carbon material 2 covering the outer surface 1s of the pores 11 can be obtained, for example, from the SEM image of the cross-section of the electrode active material 10.

In the oxide particle 1, the plurality of pores 11 may include pores that communicate with the outside. The oxide particle 1 may not necessarily include therein any completely closed void that does not communicate with the outside. With such a structure, in a process of producing the electrode active material 10, it is easy to place the carbon material 2 inside the pores 11. The fact that the plurality of pores 11 include pores that communicate with the outside can be confirmed, for example, in the SEM image of the cross-section of the electrode active material 10. For example, in the SEM image shown in FIG. 3, the carbon material 2 exists in most of the pores 11, and thus it can be confirmed that these pores 11 are pores that communicate with the outside. The fact that the plurality of pores 11 include pores that communicate with the outside can also be confirmed in the SEM image of the cross-section of the oxide particle 1 shown in FIG. 4. In the SEM image of the cross-section of the oxide particle 1, the pores that do not communicate with the outside are observed in a state of bubbles in which no resin exists, since the resin cannot permeate these pores. In FIG. 4, the state of bubbles is not confirmed.

The oxide particle 1 may be a secondary particle including a plurality of primary particles. With such a structure, it is easy for the average pore diameter S of the electrode active material 10 to satisfy the above numerical range.

The shape of each primary particle is not limited in particular. The shape of each primary particle may be, for example, a plate shape, a flake shape, a needle shape, a spherical shape, an ellipsoid shape, or the like.

For example, a pore 11 may be formed between two primary particles among the plurality of primary particles. The plurality of pores 11 may be three-dimensionally and continuously formed.

In the case where the oxide particle 1 is a secondary particle, the secondary particle may be a sintered body of a plurality of primary particles. With such a structure, good ion conduction paths can be formed inside the oxide particle 1 by bonding and densification of the primary particles. As a result, the ion-conducting properties inside the electrode active material 10 are further improved, so that the initial discharge capacity of the battery is further improved. In the case of a solid-state battery in which a liquid is not used as an electrolyte, it is desirable that the secondary particle is a sintered body of a plurality of primary particles.

The shape of the oxide particle 1 is not limited in particular. The shape of the oxide particle 1 is, for example, a spherical shape or an ellipsoid shape. The shape of the oxide particle 1 may be a needle shape, a plate shape, or the like. In the case where the oxide particle 1 is a secondary particle, the oxide particle 1 may have an uneven shape caused by primary particles having a spherical shape or the like, on the outer surface 1s.

In the case where the oxide particle 1 is a secondary particle, the median diameter of the plurality of primary particles in the electrode active material 10 may be 50 nm or more and 500 nm or less. With such a structure, it is easier for the average pore diameter S of the electrode active material 10 to satisfy the above numerical range.

In the present description, the "median diameter" means a particle diameter at which the cumulative volume in a volume-based particle size distribution is equal to 50%. The volume-based particle size distribution is measured, for example, using a laser diffraction measurement apparatus.

The median diameter of the plurality of primary particles in the electrode active material 10 may be 60 nm or more and 400 nm or less, or may be 70 nm or more and 300 nm or less.

The lower limit of the median diameter of the plurality of primary particles in the electrode active material 10 may be 80 nm, 90 nm, or even 100 nm. As the median diameter of the primary particles increases, the number of grain boundaries decreases. Therefore, from the viewpoint of ion conduction paths, it is desirable that the lower limit of the median diameter of the primary particles is in the above numerical range.

The upper limit of the median diameter of the plurality of primary particles in the electrode active material 10 may be 250 nm, 200 nm, or even 150 nm. As the median diameter of the primary particles decreases, it is made easier to control the pore structure.

The median diameter of the oxide particle 1 in the electrode active material 10 may be more than 2 $\mu$m and less than 7 $\mu$m.

The electrode active material 10 can exist between the particles of the solid electrolyte at the stage of molding the electrode. The electrode active material 10 having the oxide particle 1 with a micrometer-order size can reduce the total contact area between the electrode active material 10 and the particles of the solid electrolyte compared to the case where an oxide particle with a nanometer-order size is used. Therefore, the degree of influence as a factor that impairs the sinterability between the particles of the solid electrolyte can be reduced, so that the sinterability of the electrode can be improved. That is, it is possible to form a good contact interface between the electrode active material 10 and the solid electrolyte. Accordingly, the resistance of the electrode is reduced. Whether or not the sinterability of the electrode is good can be determined, for example, by the porosity of the electrode.

The median diameter of the oxide particle 1 in the electrode active material 10 may be 2.5 $\mu$m or more and 6.5 $\mu$m or less, or may be 3.5 $\mu$m or more and 6.0 $\mu$m or less.

The pore volume of the pores 11 in the electrode active material 10 per unit mass is defined as $V_{10}$. The pore volume $V_{10}$ may be 0.01 mL/g or more and 0.5 mL/g or less. With such a structure, many electron conduction paths are easily formed between the oxide particle 1 and the carbon material 2, so that the electron-conducting properties of the electrode active material 10 are further improved. As a result, the initial discharge capacity of the battery is further improved.

The pore volume $V_{10}$ may be 0.015 mL/g or more and 0.5 mL/g or less, or may be 0.02 mL/g or more and 0.5 mL/g or less.

The lower limit of the pore volume $V_{10}$ may be 0.03 mL/g or even 0.04 mL/g.

The upper limit of the pore volume $V_{10}$ is not limited in particular. The upper limit of the pore volume $V_{10}$ may be, for example, 0.3 mL/g or even 0.2 mL/g. With such a structure, a decrease in the volume ratio of the electrode active material 10 in the battery due to the pore volume $V_{10}$ being made excessively large, and a decrease in the capacity of the battery due to this decrease can be suppressed. In addition, in production of the battery, the collapse of the electrode active material 10 in a process in which pressure is applied to the electrode active material 10, such as a pressing process, can be avoided.

A volume occupancy ratio Rv of the carbon material 2 with respect to the pores 11 in the electrode active material 10 may be 0.5 vol% or more and 80 vol% or less. With such a structure, many electron conduction paths are easily formed between the oxide particle 1 and the carbon material 2, so that the electron-conducting properties of the electrode active material 10 are further improved. As a result, the initial discharge capacity of the battery is further improved.

The volume occupancy ratio Rv may be 1.0 vol% or more and 75 vol% or less, 3.0 vol% or more and 70 vol% or less, 5.0 vol% or more and 65 vol% or less, or 8.0 vol% or more and 61 vol% or less.

The volume occupancy ratio Rv may be 0.5 vol% or more and 30 vol% or less. With such a structure, structural destruction due to expansion and contraction of the electrode active material 10 can be suppressed by the pores 11 in which the carbon material 2 does not exist, so that the cycle characteristics of the battery tend to be improved. This effect is more likely to occur when a sintered electrode which is firmly bound around the electrode active material 10 is used.

The pore volume of the pores 11 in the oxide particle 1 before the carbon material 2 is placed is defined as $V_1$, and the pore volume of the pores 11 in the oxide particle 1 after the carbon material 2 is placed is defined as $V_{10}$. At this time, the volume occupancy ratio Rv of the carbon material 2 with respect to the pores 11 in the electrode active material 10 is calculated as $100 \times (V_1 - V_{10})/V_1$. The pore volume $V_1$ and the pore volume $V_{10}$ can be obtained, for example, from the pore distribution obtained by the mercury intrusion method described above. The pore volume $V_1$ can be obtained by the mercury intrusion method after the oxide particle 1 in which the carbon material 2 has been placed is fired to decompose and remove the carbon material 2.

The pore volume $V_1$ can be calculated from the pore distribution obtained for the oxide particle 1 before the carbon material 2 is placed. The pore volume $V_{10}$ can be calculated from the pore distribution obtained for the electrode active material 10. At this time, the voids observed other than the intraparticle voids of the oxide particle 1 and the electrode active material 10, that is, pores associated with the interparticle voids, are excluded. The confirmation of the intraparticle voids and the interparticle voids can be made by observation of cross-sections of the oxide particle 1 and the particles of the electrode active material 10 with an SEM.

A ratio Rw of the mass of the carbon material 2 to the mass of the electrode active material 10 may be 0.5 mass% or more and 30 mass% or less. In an electrode active material in which a carbon material is deposited on the surface of an oxide particle, if the mass of the carbon material is excessively large, the ion-conducting properties of the electrode active material are impaired. Therefore, in such an electrode active material, it is normal to reduce the amount of the deposited carbon material as much as possible. However, in the electrode active material 10 of the present embodiment, the carbon material 2 is placed inside the pores 11 rather than on the outer surface 1s of the oxide particle 1. Therefore, even if the ratio Rw of the mass of the carbon material 2 is 0.5 mass% or more and 30 mass% or less, the electron-conducting properties can be improved without decreasing the ion-conducting properties of the electrode active material 10.

The ratio Rw may be 1.0 mass% or more and 20 mass% or less, 1.0 mass% or more and 15 mass% or less, 1.0 mass% or more and 10 mass% or less, 1.0 mass% or more and 5 mass% or less, or even 1.0 mass% or more and 3 mass% or less. With such a structure, the capacity of the battery can be increased.

The ratio Rw of the mass of the carbon material 2 in the electrode active material 10 can be obtained, for example, by measuring the amount of weight loss of a sample by simultaneous thermogravimetric and differential thermal analysis (TG-DTA). Specifically, a TG curve of the sample is obtained using a simultaneous thermogravimetric and differential thermal analyzer. The amount of weight loss of the sample is determined from the obtained TG curve. In the case where the sample is the electrode active material 10, the amount of weight loss corresponds to the amount of carbon reduced by decomposition and vaporization. Therefore, the amount of weight loss is used as a mass $W_2$ of the carbon material 2 in the electrode active material 10. The mass of the sample is used as a mass $W_{10}$ of the electrode active material 10. The ratio Rw is calculated as $100 \times W_2/W_{10}$.

A ratio $I_D/I_G$ of a peak intensity $I_D$ at 1360 cm$^{-1}$ to a peak intensity $I_G$ at 1580 cm$^{-1}$ in a Raman spectrum of the electrode active material 10 may be 0.6 or more and 1.4 or less. The ratio $I_D/I_G$ represents the degree of graphitization, that is, the crystallinity, of the carbon material 2 included in the electrode active material 10. The smaller the ratio $I_D/I_G$ is, the higher the crystallinity of the carbon material 2 is. When the ratio $I_D/I_G$ satisfies the above numerical range, it is possible to maintain high flexibility of the carbon material 2 while improving the electrical conductivity of the carbon material 2. When the electrical conductivity of the carbon material 2 is high, the electrical conductivity inside the electrode active material 10 is improved, so that it is easy to fully utilize the initial discharge capacity of the battery. When the flexibility of the carbon material 2 is high, structural changes due to expansion and contraction of the electrode active material 10 are easily mitigated.

A content ratio Ratm of carbon existing on the outer surface 1s of the oxide particle 1 in the electrode active material 10 may be 15 atom% or more and 80 atom% or less. When the content ratio Ratm of carbon existing on the outer surface 1s of the oxide particle 1 satisfies the above numerical range, the electron-conducting properties of the electrode active material 10 are improved.

The content ratio Ratm may be 15 atom% or more and 75 atom% or less, 15 atom% or more and 70 atom% or less, or 15 atom% or more and 65 atom% or less. By setting the content ratio Ratm to be in such a numerical range, the surface covering rate of a carbon component, which is a factor that impairs the sinterability in the electrode active material 10, can be reduced, so that it is easy to form a good interface between the solid electrolyte and the electrode active material 10.

The lower limit of the content ratio Ratm may be 20 atom%, 25 atom%, or even 30 atom%. By setting the content ratio Ratm to be in such a numerical range, it is possible to form a good interface between the solid electrolyte and the electrode active material 10 while improving the electronic conductivity of the electrode active material 10.

The content ratio Ratm of carbon existing on the outer surface 1s of the oxide particle 1 in the electrode active material 10 can be obtained, for example, by X-ray photoelectron spectroscopy (XPS). Specifically, XPS spectra of main elements including carbon element can be obtained by filling a cell for powder with the electrode active material 10 and performing XPS analysis. The proportion (atom%) of each element is calculated using the peak area intensity in each XPS spectrum. The calculated proportion (atom%) of carbon element can be regarded as the content ratio Ratm (atom%).

The BET specific surface area of the oxide particle 1 may be 1 m$^2$/g or more and 7 m$^2$/g or less.

The BET specific surface area of the electrode active material 10 may be 2 m$^2$/g or more and 15 m$^2$/g or less.

The BET specific surface area of the oxide particle 1 and the BET specific surface area of the electrode active material 10 can be obtained, for example, by converting data of adsorption isotherms obtained by a gas adsorption method using nitrogen gas described above, by the BET (Brunauer-Emmett-Teller) method.

Examples of the oxide particle 1 include titanium(IV) oxide and composite oxides containing titanium and transition metals other than titanium. These materials have the ability to occlude and release metal ions such as lithium ions and thus are suitable for the electrodes of solid-state batteries, for example.

It is desirable that the oxide particle 1 is capable of being co-sintered with the solid electrolyte. Specifically, it is desirable that the oxide particle 1 is not easily reactive with the solid electrolyte and that the crystal structure of the oxide is maintained even after sintering. For example, titanium(IV) oxide is not easily reactive with a NASICON-type oxide solid electrolyte, which is a typical oxide solid electrolyte, and thus is suitable for the electrode active material 10 of the present embodiment. The oxide particle 1 may contain titanium(IV) oxide.

Examples of titanium(IV) oxide include anatase-type (tetragonal) titanium oxide, rutile-type (tetragonal) titanium oxide, and brookite-type (orthorhombic) titanium oxide.

The titanium oxide may include anatase-type titanium oxide. The main component of the titanium oxide may be the anatase-type titanium oxide. The anatase-type titanium oxide is suitable as an electrode active material for lithium-ion secondary batteries, for example. In addition, the sinterability of the electrode including the electrode active material 10 and the solid electrolyte is improved by using the anatase-type titanium oxide. The "main component" means a component contained in the largest amount by mass ratio. 90 mass% or more of the titanium oxide may be anatase-type titanium oxide. The titanium oxide may substantially include only anatase-type titanium oxide.

The structure of the titanium oxide can be examined by X-ray diffraction measurement or Raman spectroscopy. The ratio of the components contained in the titanium oxide can be confirmed by analyzing the results of X-ray diffraction measurement using the Rietveld method.

An example of a composite oxide containing titanium and a transition metal other than titanium is a composite oxide containing titanium and niobium. The composite oxide containing titanium and niobium also has the ability to occlude and release metal ions such as lithium ions, and thus is suitable for the electrode active material 10 of the present embodiment. The composite oxide containing titanium and niobium has a composition of $TiNb_2O_7$, for example.

Examples of the carbon material 2 include graphite having a hexagonal ring network of carbon atoms, and amorphous carbon.

The shape of the carbon material 2 itself is not limited in particular. For example, the carbon material 2 may be fine particles of a carbon material 101 having a plate shape, a needle shape, a spherical shape, an ellipsoid shape, or the like.

<Method for producing electrode active material>

A method for producing the electrode active material 10 of the present embodiment will be described. The electrode active material 10 can be produced, for example, by the following method.

The oxide particle 1 having the plurality of pores 11 is prepared. The oxide particle 1 contains titanium and does not contain lithium. A method for producing the oxide particle 1 having the plurality of pores 11 is not limited in particular. The oxide particle 1 may be a secondary particle including a plurality of primary particles. The secondary particle may be a sintered body of a plurality of primary particles.

A method for placing the carbon material 2 inside the pores 11 of the oxide particle 1 is not limited in particular. The carbon material 2 can be placed inside the pores 11 of the oxide particle 1, for example, by firing a mixture containing the oxide particle 1, a precursor of the carbon material 2, and a solvent such as ethanol in an inert atmosphere, by a liquid phase method. As the precursor of the carbon material 2, for example, a sugar and/or an ester of a sugar can be used. Examples of the sugar and/or the ester of the sugar include one or more compounds selected from the group consisting of glucose, fructose, xylose, sucrose, cellulose, and esters thereof. Alternatively, the carbon material 2 may be placed inside the pores 11 of the oxide particle 1, for example, using a vapor phase deposition method such as a CVD method.

(Second embodiment)

Hereinafter, a second embodiment will be described. The description that overlaps with that of the first embodiment is omitted as appropriate.

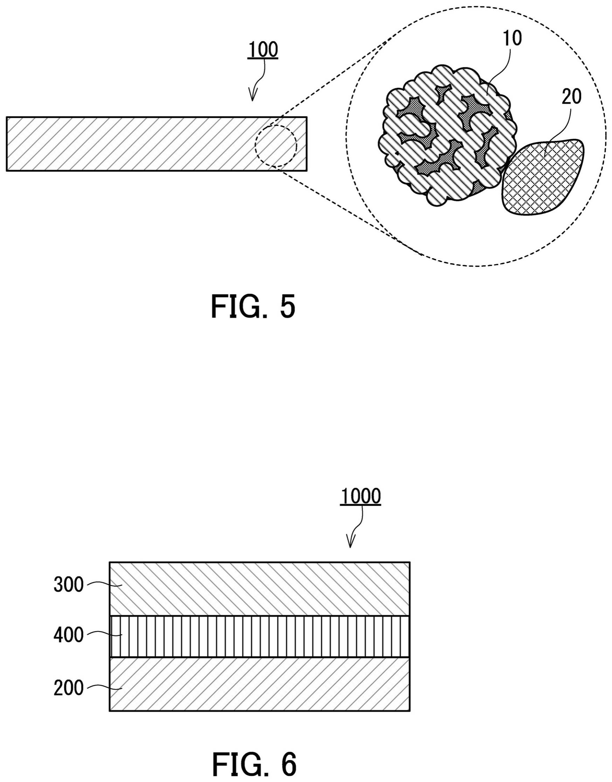

FIG. 5 is a cross-sectional view showing a schematic configuration of an electrode 100 according to the second embodiment. The electrode 100 includes the electrode active material 10 according to the first embodiment and a solid electrolyte 20 in contact with the electrode active material 10. The electrode 100 is an electrode produced by firing a molded body of a powder material including powder of the electrode active material 10 and powder of the solid electrolyte 20. The electrode 100 is used, for example, as the positive electrode or the negative electrode of a solid-state battery. With such a structure, it is possible to improve the initial discharge capacity of the battery while maintaining the sinterability of the electrode 100.

The solid electrolyte 20 can be an electrolyte suitable for forming the electrode 100. Examples of such an electrolyte include oxide solid electrolytes. Examples of oxide solid electrolytes include solid electrolytes having a NASICON-type structure, solid electrolytes having a perovskite-type structure, solid electrolytes having a LISICON-type structure, solid electrolytes having a garnet-type structure, etc. Among these, a lithium-containing phosphoric acid compound having a NASICON-type structure is suitable for the electrode 100.

NASICON-type solid electrolytes are materials that are capable of being sintered at low temperatures, compared to other oxide solid electrolytes such as solid electrolytes having a perovskite-type structure and solid electrolytes having a garnet-type structure. Being capable of being sintered at low temperatures means being advantageous for suppressing reactions between the electrode active material 10 and the solid electrolyte 20. In addition, in the case of being capable of being sintered at low temperatures, it is also possible to avoid transition from the anatase-type titanium oxide to rutile-type titanium oxide.

The lithium-containing phosphoric acid compound may have a composition of $Li_{1+x}Al_xGe_{2-x}(PO_4)_3$ ($0 \le x \le 2$). When the compound having such a composition is used as the solid electrolyte 20 and the electrode active material 10 is used as an electrode active material, the effect of maintaining the sinterability of the electrode 100 is more sufficiently exhibited. In the present description, the compound having the above composition is sometimes referred to as "LAGP".

Another example of the lithium-containing phosphoric acid compound is $Li_{1+x}Al_xTi_{2-x}(PO_4)_3$ ($0 \le x \le 2$). In the present description, the compound having the above composition is sometimes referred to as "LATP".

LAGP is more suitable for the electrode 100 of the present disclosure. That is, LAGP does not contain Ti, and therefore has a wider potential window on the noble side (negative side) than LATP. In this case, it is possible to select a negative electrode active material having a lower potential. This is advantageous for providing high-voltage and high-capacity batteries. One example of achieving such an effect is a combination of LAGP and titanium(IV) oxide. In addition, LAGP is an electrolyte that is capable of being sintered at lower temperatures than LATP. Being capable of being sintered at lower temperatures means being advantageous for suppressing reactions between the electrode active material 10 and the solid electrolyte 20.

In the electrode 100, the solid electrolyte 20 has a network-like sintered phase. For example, in a cross-section of the electrode 100, the length of the interface in a portion where the particles of the electrode active material 10 and the sintered phase of the solid electrolyte 20 are in contact with each other without any gaps is in the micrometer order, and the sintered phase of the solid electrolyte 20 may form a good interface with the particles of the electrode active material 10. The existence of such a contact interface contributes to reducing the resistance of the electrode 100.

The sintered phase of the solid electrolyte 20 can be a phase in which the particles of the solid electrolyte 20 are combined and the grain boundaries therebetween are lost. The sintered phase having no grain boundaries can exhibit excellent ion-conducting properties and can form a good contact interface with the particles of the electrode active material 10. Such a structure can be formed by using an amorphous solid electrolyte 20 as the raw material for the electrode 100. For example, the structure of the sintered phase can be confirmed by observing a cross-section of the electrode 100 at a magnification of 10000 times using an SEM.

In the electrode 100, the particles of the electrode active material 10 are connected by the sintered phase of the solid electrolyte 20. The sintered phase of the solid electrolyte 20 includes a crystalline phase and an amorphous phase. In the case where the sintered phase of the solid electrolyte 20 includes a crystalline phase, the electrode 100 exhibits higher ion-conducting properties, so that such a sintered phase is desirable. As described later, the crystalline phase can be formed by appropriately adjusting the firing temperature. For example, if firing is performed at a temperature equal to or higher than the crystallization temperature of the solid electrolyte 20, the electrode 100 including a crystalline solid electrolyte 20 is obtained. However, an amorphous phase may be included in the solid electrolyte 20. In the case where an amorphous phase is included, the flexibility of the solid electrolyte 20 is increased, so that volume changes due to expansion and contraction of the electrode active material 10 are easily absorbed by the solid electrolyte 20.

The crystallinity of the solid electrolyte 20 can be examined by X-ray diffraction measurement or a differential scanning calorimeter (DSC). In the case of using X-ray diffraction measurement, if only a halo pattern is observed in an X-ray diffraction pattern of the solid electrolyte 20, it can be determined that the solid electrolyte 20 is amorphous.

The electrode 100 may further include a conductive agent. Examples of the conductive agent include carbon materials such as graphite, carbon black, carbon fibers, and carbon nanotubes. The graphite may be natural graphite, or may be artificial graphite. Examples of the carbon black include acetylene black, Ketjen black, etc. The carbon material may be crystalline, or may be amorphous. The conductive agent typically has a particle shape in the nanometer or micrometer order. Examples of the particle shape include a spherical shape, an ellipsoid shape, a flake shape, a fiber shape, etc.

The content ratio of the electrode active material 10 in the electrode 100 is, for example, 15 mass% or more and 60 mass% or less. The content ratio of the solid electrolyte 20 in the electrode 100 is, for example, 30 mass% or more and 80 mass% or less. The content ratio of the conductive agent in the electrode 100 may be, for example, 0.1 mass% or more and 10 mass% or less, 0.1 mass% or more and 5 mass% or less, or even 0.3 mass% or more and 2 mass% or less.

<Method for producing electrode>

A method for producing the electrode 100 of the present embodiment will be described. The electrode 100 can be produced, for example, by the following method.

The electrode 100 can be produced by firing a molded body of a mixture of the electrode active material 10 and the solid electrolyte 20.

First, a slurry is prepared by mixing raw materials (step S1). The raw materials of the slurry are, for example, the electrode active material 10, the solid electrolyte 20, the conductive agent, a binder, and a solvent. The slurry may be prepared by mixing the binder and the solvent to prepare a binder solution in advance, and mixing the electrode active material 10, the solid electrolyte 20, and the conductive agent into the binder solution.

The oxide particle 1 in the electrode active material 10 has a median diameter of more than 2 $\mu$m and less than 7 $\mu$m, for example, as a value measured by a laser diffraction-type particle size distribution measurement apparatus. With such a structure, the sinterability of the electrode 100 can be enhanced.

In the present description, the "median diameter" means a particle diameter at which the cumulative volume in a volume-based particle size distribution is 50%. The volume-based particle size distribution is measured by a laser diffraction-type particle size distribution measurement apparatus at the stage of the raw materials such as the electrode active material 10. At the stage of the electrode 100, the volume-based particle size distribution is obtained from an SEM image of a cross-section. The median diameter measured by the laser diffraction-type particle size distribution measurement apparatus is normally larger than a median diameter obtained from an SEM image of a cross-section.

The median diameter of the oxide particle 1 in the electrode active material 10 included in the electrode 100 can be a value calculated from an electron microscope image of a cross-section of the electrode 100. Specifically, the cross-section of the electrode 100 is observed using an SEM. The magnification is, for example, 3000 times. Using image analysis software, the Feret diameters of the oxide particles 1 existing in two different observation visual fields are measured. The "Feret diameter" is the length of a perpendicular line formed by sandwiching the particle between two parallel lines in a fixed direction. The number of particles to be measured is, for example, 185 or more. That is, the size of each observation visual field is adjusted such that 185 or more particles are included in the two different observation visual fields. Next, the volume of each particle is calculated by assuming that the particle is a sphere having the measured Feret diameter. A particle size distribution is created by taking a particle diameter (= Feret diameter, in increments of 0.1 $\mu$m) on the horizontal axis and taking the volume of the particles having that particle diameter relative to the entire volume on the vertical axis. The particle diameter at which the cumulative volume in this particle size distribution is 50% is regarded as the median diameter of the oxide particle 1 in the electrode active material 10 included in the electrode 100. The median diameter of the primary particles in the electrode active material 10 included in the electrode 100 can also be obtained by the same method.

The electrode active material 10, the solid electrolyte 20, and the conductive agent can each be a powder material. The median diameter of the particles of the solid electrolyte 20 is desirably smaller than the median diameter of the particles of the electrode active material 10. When the electrode active material 10 and the solid electrolyte 20 satisfy such a relationship, the sinterability of the electrode 100 can be enhanced. As a result, the resistance of the electrode 100 can be reduced.

The ratio of the median diameter of the particles of the electrode active material 10 to the median diameter of the particles of the solid electrolyte 20 is, for example, 2 or more and 30 or less. When the electrode active material 10 and the solid electrolyte 20 satisfy such a relationship, the sinterability of the electrode 100 can be enhanced. As a result, the resistance of the electrode 100 can be reduced. The ratio of the median diameter of the particles of the electrode active material 10 to the median diameter of the particles of the solid electrolyte 20 may be 4 or more and 30 or less, or may be 4 or more and 20 or less.

The BET specific surface area of the particles of the electrode active material 10 may be 1 $m^2$/g or more and 7 $m^2$/g or less. If the BET specific surface area of the particles of the electrode active material 10 is appropriately adjusted, side reactions between the particles of the electrode active material 10 and the particles of the solid electrolyte 20 during firing are suppressed. As a result, the electrode 100 can have high ion-conducting properties. If side reactions occur between the particles of the electrode active material 10 and the particles of the solid electrolyte 20, an interface resistance layer is formed, so that such side reactions have to be suppressed.

The particles of the solid electrolyte 20 have, for example, a median diameter of 100 nm or more and 2000 nm or less.

The particles of the solid electrolyte 20 as a raw material can be amorphous. The amorphous solid electrolyte 20 can form a good interface with the particles of the electrode active material 10 at low temperatures by performing preliminary firing in a temperature range that is equal to or higher than the glass transition temperature of the solid electrolyte 20 and equal to or lower than the crystallization temperature of the solid electrolyte 20. This is because the solid electrolyte 20 has good flexibility in the temperature range that is equal to or higher than the glass transition temperature of the solid electrolyte 20 and equal to or lower than the crystallization temperature of the solid electrolyte 20. Then, the crystallinity of the solid electrolyte 20 is increased by performing firing in an appropriate temperature range that is equal to or higher than the crystallization temperature of the solid electrolyte 20 and equal to or lower than the melting point of the solid electrolyte 20, whereby the ion-conducting properties of the electrode 100 is improved. In addition, the amorphous solid electrolyte 20 is capable of being sintered at lower temperatures than a crystalline solid electrolyte 20. Being capable of being sintered at lower temperatures means being advantageous in terms of suppressing reactions between the electrode active material 10 and the solid electrolyte 20.

The fact that the solid electrolyte 20 is amorphous can be confirmed using a differential scanning calorimeter (DSC). For example, if a degree of crystallization obtained using the DSC is 30% or less, it can be said that the solid electrolyte 20 is amorphous. The degree of crystallization is obtained using the following formula. A measured crystallization heat amount means the amount of heat generated due to crystallization of the solid electrolyte 20 which is a sample to be measured. A fully amorphous crystallization heat amount means the amount of heat generated during crystallization of an amorphous solid electrolyte for which only a halo pattern is observed in an X-ray diffraction pattern.

$$\text{Degree of crystallization (\%)} = 100 \times (Qa - Qs)/Qa$$

Qs: measured crystallization heat amount (J/g)

Qa: fully amorphous crystallization heat amount (J/g)

The binder is decomposed and removed by firing. As the binder, thermoplastic resins such as polyvinyl butyral, polyvinylidene fluoride, cellulose, acrylic, urethane, and polyvinyl alcohol can be used. The solvent is typically an organic solvent such as absolute alcohol (e.g., absolute ethanol), toluene, butyl acetate, and NMP. In addition, the slurry may contain a plasticizer. The type of the plasticizer is not limited in particular, and phthalates such as dioctyl phthalate and diisononyl phthalate can be used.

The conductive agent can be a carbon material. The carbon material may include amorphous carbon. The particles of the carbon material may have a median diameter of 70 nm or less and a BET specific surface area of 60 $m^2$/g or less. By using such a carbon material, the sinterability of the electrode 100 can be enhanced. The lower limit of the median diameter of the particles of the carbon material is not limited in particular, and is 10 nm, for example. The lower limit of the BET specific surface area of the particles of the carbon material is not limited in particular, and is 10 $m^2$/g, for example.

Next, the slurry is applied to a substrate to form a coating film (step S2). The substrate can be a resin substrate, a glass substrate, a ceramic substrate, or a metal substrate. After the coating film is formed, the solvent is removed from the coating film. Accordingly, a molded body for an electrode is obtained. In order to remove the solvent from the coating film, the coating film may be heated, or the coating film may be naturally dried. If necessary, the coating film may be pressed or heat-pressed. The slurry may be molded and dried without using a substrate.

After the slurry is applied to the substrate to form a coating film, the coating film may be pulverized, and a raw material powder obtained by the pulverization may be pressed or heat-pressed to produce a molded body for an electrode.

Next, the molded body for an electrode is preliminarily fired (step S3). The preliminary firing is performed, for example, in atmospheric air or in an inert atmosphere. The inert atmosphere is, for example, a nitrogen gas atmosphere or a rare gas atmosphere. It is also possible to mix a small amount of oxygen into the inert atmosphere. The temperature (ambient temperature) of the preliminary firing is, for example, 250°C to 600°C. The firing time of the preliminary firing is, for example, 1 hour to 60 hours.

It is desirable to perform the preliminary firing in a temperature range where the binder is sufficiently removed, the solid electrolyte 20 softens beyond the glass transition temperature thereof, and crystallization of the solid electrolyte 20 does not proceed. By performing such firing, a good interface is formed between the electrode active material 10 and the solid electrolyte 20 due to the removal of the binder.

Next, the molded body for an electrode is normally fired (step S4). The normal firing is performed, for example, in atmospheric air or in an inert atmosphere. The inert atmosphere is, for example, a nitrogen gas atmosphere or a rare gas atmosphere. It is also possible to mix a small amount of oxygen into the inert atmosphere. The temperature (ambient temperature) of the normal firing is, for example, 550°C to 900°C. The firing time of the normal firing is, for example, 1 hour to 15 hours.

In the normal firing, a sintered phase in which the particles of the solid electrolyte 20 are combined and which has no grain boundaries is formed. It is desirable to perform the normal firing in a temperature range where crystallization of the solid electrolyte 20 appropriately proceeds. The ion-conducting properties of the electrode 100 are improved as the crystallinity of the solid electrolyte 20 is improved.

The electrode 100 can be produced through the steps described above.

(Third embodiment)

Hereinafter, a third embodiment will be described. The description that overlaps with that of the first embodiment and the second embodiment is omitted as appropriate.

FIG. 6 is a cross-sectional view showing a schematic configuration of a battery 1000 according to the third embodiment. The battery 1000 includes a positive electrode 200, a negative electrode 300, and an electrolyte layer 400. The electrolyte layer 400 is placed between the positive electrode 200 and the negative electrode 300. The electrode 100 according to the second embodiment is used as the positive electrode 200 or the negative electrode 300. By using the electrode 100 as the positive electrode 200 or the negative electrode 300, an effect of improving the initial discharge capacity of the battery 1000 while maintaining the sinterability of the electrode 100 is obtained.

The electrode 100 according to the second embodiment is desirably used as the negative electrode 300. That is, the negative electrode 300 may include the electrode 100. In this case, the electrode active material 10 acts as a negative electrode active material. Since an oxide containing titanium is suitable for a negative electrode active material, the electrode 100 is suitable as the negative electrode 300. Therefore, it is easy to obtain an effect of improving the initial discharge capacity of the battery 1000 while maintaining the sinterability of the electrode 100.

In the case where the electrode 100 is used as the negative electrode 300, the electrode active material 10 does not contain lithium in a state where the battery 1000 has not been charged or discharged after being assembled. That is, the battery 1000 is in a state of being fully discharged.

However, it is also possible to use the electrode 100 as the positive electrode 200. In this case, a material that is less noble than the oxide containing titanium, for example, lithium metal, is used as a negative electrode active material.

The positive electrode 200 includes a positive electrode active material. The positive electrode active material is a material having the ability to occlude and release metal ions such as lithium ions. Examples of the positive electrode active material include lithium-containing transition metal oxides, lithium-containing transition metal phosphates, etc. Among them, lithium-containing transition metal phosphates are suitable for the positive electrode 200. Examples of lithium-containing transition metal phosphates include lithium iron phosphate, lithium vanadium phosphate, lithium cobalt phosphate, lithium nickel phosphate, etc. In addition to the positive electrode active material, the positive electrode 200 may include a solid electrolyte, a conductive agent, etc.

The electrolyte layer 400 includes a solid electrolyte. The solid electrolyte is, for example, a sulfide solid electrolyte, a halide solid electrolyte, a complex hydride solid electrolyte, a porous oxide solid electrolyte impregnated with an electrolytic solution, or an oxide solid electrolyte. The composition of the solid electrolyte included in the electrolyte layer 400 may be the same as or different from the composition of the solid electrolyte included in the positive electrode 200. The composition of the solid electrolyte included in the electrolyte layer 400 may be the same as or different from the composition of the solid electrolyte included in the negative electrode 300. The positive electrode 200, the electrolyte layer 400, and the negative electrode 300 may include a solid electrolyte having the same composition.

In the battery 1000, the positive electrode 200, the negative electrode 300, and the electrolyte layer 400 may be composed of a sintered body. In this case, the positive electrode 200, the negative electrode 300, and the electrolyte layer 400 can be formed integrally by simultaneous firing. When the positive electrode 200, the negative electrode 300, and the electrolyte layer 400 are integrated by simultaneous firing, mutual contact between the positive electrode 200, the negative electrode 300, and the electrolyte layer 400 can be ensured, so that the conductance of metal ions such as lithium ions can be improved.

<Method for producing battery>

A method for producing the battery 1000 of the present embodiment will be described. The battery 1000 can be produced, for example, by the following method.

First, a slurry is prepared (step ST1). Specifically, a positive electrode slurry, an electrolyte layer slurry, and a negative electrode slurry are prepared. These slurries can be prepared in accordance with the method described in step S1 of the second embodiment. It should be noted that the electrolyte slurry does not contain an electrode active material and a conductive agent.

Next, a green sheet is produced (step ST2). Specifically, a positive electrode green sheet, an electrolyte layer green sheet, and a negative electrode green sheet are produced using the positive electrode slurry, the electrolyte layer slurry, and the negative electrode slurry, respectively. Each green sheet can be produced by applying the slurry to a substrate to form a coating film, and drying the coating film. Each green sheet is peeled off from the substrate at an appropriate timing.

Next, the green sheets are stacked (step ST3). Specifically, the positive electrode green sheet, the electrolyte layer green sheet, and the negative electrode green sheet are stacked in this order, and are pressure-bonded by applying pressure thereto. Accordingly, a laminate including the positive electrode green sheet, the electrolyte layer green sheet, and the negative electrode green sheet is obtained.

Next, steps of preliminary firing (step ST4) and normal firing (step ST5) are performed. The preliminary firing and the normal firing are as described in step S3 and step S4 of the second embodiment. The sintered battery 1000 is obtained through the steps described above.

(Other embodiments)

(Additional notes)

The following techniques are disclosed by the description of the above embodiments.

(Technique 1)

An electrode active material including:

an oxide particle containing titanium and not containing lithium; and
a carbon material, wherein
the oxide particle has a plurality of pores having an average pore diameter of 50 nm or more and 200 nm or less, and
the carbon material exists inside the pores.

With the electrode active material of Technique 1, it is possible to improve the initial discharge capacity of a battery while maintaining the sinterability of an electrode.

(Technique 2)

The electrode active material according to Technique 1, wherein the oxide particle is a secondary particle including a plurality of primary particles. With such a structure, it is easy for the average pore diameter of the electrode active material to satisfy the above numerical range.

(Technique 3)

The electrode active material according to Technique 2, wherein the secondary particle is a sintered body of the plurality of primary particles. With such a structure, the primary particles can be bonded to each other, and the ion-conducting properties in the particles can be further improved. As a result, the initial discharge capacity of the battery is further improved.

(Technique 4)

The electrode active material according to Technique 2 or 3, wherein a median diameter of the plurality of primary particles is 50 nm or more and 500 nm or less. With such a structure, it is easier for the average pore diameter of the electrode active material to satisfy the above numerical range.

(Technique 5)

The electrode active material according to any one of Techniques 1 to 4, wherein a median diameter of the oxide particle is more than 2 $\mu$m and less than 7 $\mu$m. With such a structure, the sinterability of the electrode can be improved. That is, it is possible to form a good contact interface between the electrode active material and a solid electrolyte. Accordingly, the resistance of the electrode is reduced.

(Technique 6)

The electrode active material according to any one of Techniques 1 to 5, wherein a pore volume of the pores in the electrode active material per unit mass is 0.01 mL/g or more and 0.5 mL/g or less. With such a structure, many electron conduction paths are easily formed between the oxide particle and the carbon material, so that the electron-conducting properties of the electrode active material are further improved. As a result, the initial discharge capacity of the battery is further improved.

(Technique 7)

The electrode active material according to any one of Techniques 1 to 6, wherein a volume occupancy ratio of the carbon material with respect to the pores is 0.5 vol% or more and 80 vol% or less. With such a structure, many electron conduction paths are easily formed between the oxide particle and the carbon material, so that the electron-conducting properties of the electrode active material are further improved. As a result, the initial discharge capacity of the battery is further improved.

(Technique 8)

The electrode active material according to any one of Techniques 1 to 7, wherein the plurality of pores include a pore communicating with the outside. With such a structure, it is easy to place the carbon material inside the pores in a process of producing the electrode active material.

(Technique 9)

The electrode active material according to any one of Techniques 1 to 8, wherein a ratio $I_D/I_G$ of a peak intensity $I_D$ at 1360 cm$^{-1}$ to a peak intensity $I_G$ at 1580 cm$^{-1}$ in a Raman spectrum of the electrode active material is 0.6 or more and 1.4 or less. When the ratio $I_D/I_G$ satisfies the above numerical range, it is possible to maintain high flexibility of the carbon material while improving the electrical conductivity of the carbon material.

(Technique 10)

The electrode active material according to any one of Techniques 1 to 9, wherein the oxide particle contains titanium oxide. The oxide particle having such a configuration has the ability to occlude and release metal ions such as lithium ions and thus is suitable for the electrodes of solid-state batteries, for example.

(Technique 11)

An electrode including:

the electrode active material according to any one of Techniques 1 to 10; and
a solid electrolyte in contact with the electrode active material.

With the electrode of Technique 11, it is possible to improve the initial discharge capacity of the battery while maintaining the sinterability of the electrode.

(Technique 12)

The electrode according to Technique 11, wherein the solid electrolyte has a composition of $Li_{1+x}Al_xGe_{2-x}(PO_4)_3$ ($0 \leq x \leq 2$). When the compound having such a composition is used as a solid electrolyte and the electrode active material is used, an effect of maintaining the sinterability of the electrode is more sufficiently exhibited.

(Technique 13)

A battery including:

a positive electrode;
a negative electrode; and
an electrolyte layer placed between the positive electrode and the negative electrode, wherein
the positive electrode or the negative electrode includes the electrode according to Technique 11 or 12.

With the battery of Technique 13, an effect of improving the initial discharge capacity of the battery while maintaining the sinterability of the electrode is obtained.

(Technique 14)

The battery according to Technique 13, wherein the negative electrode includes the electrode. With such a structure, it is easy to obtain the effect of improving the initial discharge capacity of the battery while maintaining the sinterability of the electrode.

EXAMPLES

The details of the present disclosure will be described below using examples and reference examples.

[Production of electrode active material]

<<Example 1>>

As oxide particles, particles of $TiO_2$ (anatase-type) were prepared. The particles of $TiO_2$ were each a porous secondary particle including a plurality of primary particles. The primary particles had a median diameter of 82 nm. The secondary particles had a median diameter of 4.18 $\mu$m, a BET specific surface area of 5.17 $m^2$/g, a pore volume of 0.071 mL/g, and an average pore diameter (median diameter) of 82 nm.
A mixture was obtained by mixing the oxide particles and sucrose in a solvent. Ethanol was used as the solvent. The mass of carbon (C) contained in sucrose was 1.5% relative to the mass of $TiO_2$. Next, the solvent was removed while stirring the mixture in an environment of 80°C to obtain a dried product. Then, the dried product was fired in a nitrogen gas atmosphere at 800°C for 2 hours. Thus, particles of an electrode active material of Example 1 were obtained.

<<Example 2>>

Particles of an electrode active material of Example 2 were obtained by the same method as that of Example 1, except that the mass of carbon (C) contained in sucrose relative to the mass of $TiO_2$ was changed to 3.0%.

<<Example 3>>

Particles of an electrode active material of Example 3 were obtained by the same method as that of Example 1, except that the mass of carbon (C) contained in sucrose relative to the mass of $TiO_2$ was changed to 5.0%.

<<Reference Example 1>>

The oxide particles of Example 1 were used as particles of an electrode active material of Reference Example 1.

[Measurement of average pore diameter S]

For the particles of the electrode active materials of Examples 1 to 3, the average pore diameter S (nm) of the pores was obtained by the method described above. Specifically, a pore distribution was measured using a mercury porosimeter (AutoPore V9620, manufactured by Micromeritics Instrument Corporation) under the following analysis conditions. The average pore diameter S (median diameter) was obtained from the obtained pore distribution. The results are shown in Table 1.

<Analysis conditions>

Sample: about 0.2 g (collected in a standard 5-cc cell for powder)
Measurement range: equivalent pore diameter D in the range of about 0.003 $\mu$m to 100 $\mu$m
Initial pressure P: 3.5 psia (equivalent to pore diameter of about 50 $\mu$m)
Contact angle $\theta$ between mercury and the wall of a sample: 130°
Surface tension $\gamma$ of mercury: 485 dynes/cm

[Measurement of volume occupancy ratio Rv of carbon material]

For the particles of the electrode active materials of Examples 1 to 3, the volume occupancy ratio Rv (vol%) of the carbon material with respect to the pores was obtained by the method described above. Specifically, a pore distribution was measured using a mercury porosimeter (AutoPore V9620, manufactured by Micromeritics Instrument Corporation) under the above analysis conditions. The pore volume (0.071 mL/g) of $TiO_2$ was used as the pore volume $V_1$. The pore volume calculated from the pore distribution of the particles of the electrode active material was used as the pore volume $V_{10}$. The volume occupancy ratio Rv was calculated as $100 \times (V_1 - V_{10})/V_1$. The results are shown in Table 1.

[Measurement of ratio Rw of mass of carbon material]

For the particles of the electrode active materials of Examples 1 to 3, the ratio Rw (mass%) of the mass of the carbon material was obtained by the method described above. Specifically, using a simultaneous thermogravimetric and differential thermal analyzer (TG/DTA STA300, manufactured by Hitachi High-Tech Science Corporation), a TG curve of each sample was obtained by raising the temperature from room temperature to 900°C at 10°C/minute under the condition of an air flow rate of 200 mL/min. The amount of weight loss of the sample was obtained from the obtained TG curve. The amount of weight loss was used as the mass $W_2$ of the carbon material in the sample. The mass of the sample was used as the mass $W_{10}$ of the particles of the electrode active material. The ratio Rw was calculated as $100 \times W_2/W_{10}$. The results are shown in Table 1.

[Measurement of ratio $I_D/I_G$]

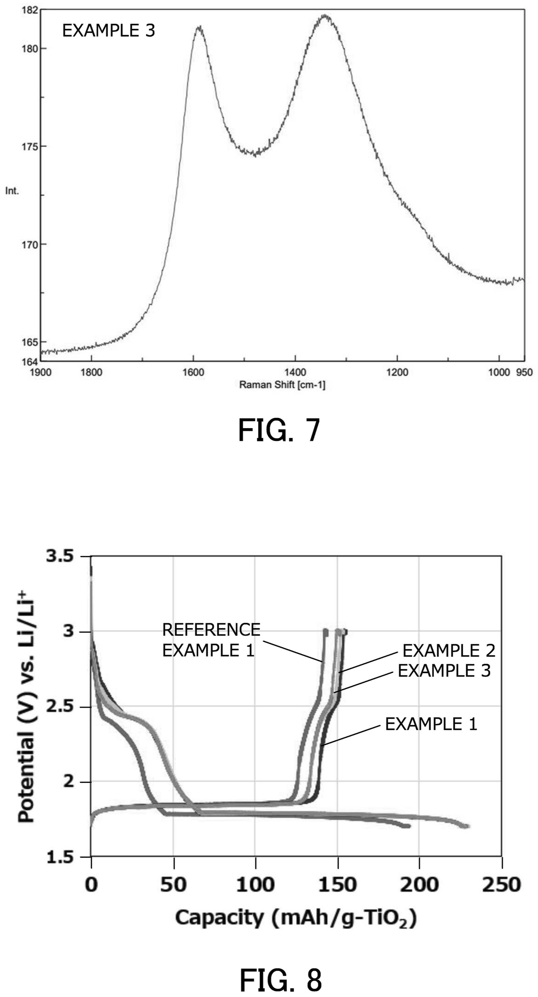

For the electrode active materials of Examples 1 to 3, the ratio $I_D/I_G$ of the peak intensity $I_D$ at 1360 cm$^{-1}$ to the peak intensity $I_G$ at 1580 cm$^{-1}$ in a Raman spectrum was obtained by the method described above. Specifically, a Raman spectrum of each sample was obtained using a micro-Raman spectrometer (NRS-5100, manufactured by JASCO Corporation) under the following analysis conditions. FIG. 7 shows the Raman spectrum of the electrode active material of Example 3. For example, the peak intensity $I_G$ and the peak intensity $I_D$ obtained from the Raman spectrum in FIG. 7 were 15.358 and 15.064, respectively. The ratio $I_D/I_G$ was calculated based on the peak intensity $I_G$ and the peak intensity $I_D$. The results are shown in Table 1.

<Analysis conditions>

Measurement method: microscopic measurement ($\times$100)
Laser wavelength: 532 nm, output of 1.3 mW
Slit: 100 $\mu$m $\times$ 1000 $\mu$m
Aperture: a diameter of 4000 $\mu$m
Exposure: 1 second x 3 times (equivalent to 100 points)
Measurement wavelength range: 950 cm$^{-1}$ to 1900 cm$^{-1}$

[Measurement of content ratio Ratm of carbon existing on outer surface]

For the particles of the electrode active materials of Examples 1 to 3 and Reference Example 1, the content ratio Ratm (atom%) of carbon existing on the outer surfaces of the oxide particles was obtained by the method described above. Specifically, XPS spectra of carbon, oxygen, titanium, and potassium were obtained by filling a cell for powder with each sample and performing XPS analysis under the following analysis conditions using an XPS apparatus (PHI Quantera SXM, manufactured by ULVAC-PHI, INCORPORATED). The proportion (atom%) of each element was calculated using the peak area intensity in the XPS spectrum. The calculated proportion (atom%) of carbon was regarded as the content ratio Ratm (atom%). The results are shown in Table 1.

<Analysis conditions>

X-ray source: monochromatic Al-K$\alpha$ (1486.6 eV), 15 kW/25W
Analysis area: 300 mm $\times$ 800 mm (scanning microfocus, 100 mmf)
Photoelectron extraction angle: 45°

<Neutralization conditions>

Electron + floating ion neutralization

<Measurement conditions>

Step (eV): 1.0 (wide), 0.05 (narrow)
Pass energy (eV): 280.0 (wide), 55.0 (narrow)
Measurement time (ms): 60 (narrow)

[Measurement of median diameter]

The median diameters of the particles of the electrode active materials of Examples 1 to 3 were measured using a laser diffraction-type particle size distribution measurement apparatus (Mastersizer 3000, manufactured by Malvern Panalytical Ltd.). The results are shown in Table 1.

[Measurement of BET specific surface area]

The BET specific surface areas of the electrode active materials of Examples 1 to 3 were measured by the method described above. Specifically, a nitrogen gas adsorption test was conducted on each sample. Using analysis software (ASiQWin), analysis by the BET method was performed in the linear region of an adsorption isotherm to calculate the BET specific surface area. The results are shown in Table 1.

[Table 1]

| | Electrode active material | | | |
| --- | --- | --- | --- | --- |
| | Average pore diameter S (median diameter) (nm) | Pore volume $V_{10}$ (mL/g) | Volume occupancy ratio Rv of carbon material (vol%) | Ratio Rw of mass of carbon material (mass%) |
| Example 1 | 97 | 0.065 | 8.45 | 1.5 |
| Example 2 | 97 | 0.047 | 33.80 | 3.0 |
| Example 3 | 100 | 0.028 | 60.56 | 5.0 |
| Reference Example 1 | 82 | 0.071 | - | - |

[Table 1] (cont.)

| | Electrode active material | | | |
| --- | --- | --- | --- | --- |
| | Ratio $I_D/I_G$ | Content ratio Ratm of carbon (atom%) | Median diameter ($\mu$m) | BET specific surface area ($m^2$/g) |
| Example 1 | 0.981 | 59.0 | 4.67 | 6.24 |
| Example 2 | 0.981 | 63.0 | 5.30 | 9.32 |
| Example 3 | 0.981 | 64.0 | 5.62 | 12.43 |
| Reference Example 1 | - | 12.0 | 4.18 | 5.17 |

[Production of negative electrode pellets]

<<Example 1>>

Negative electrode pellets of Example 1 were produced by the following method using the electrode active material of Example 1 as a negative electrode active material.

(Preparation of binder solution)

As a binder, a predetermined amount of powder of acrylic resin was placed in a 150-cc container. Ethanol was added to the container such that acrylic resin : ethanol was 15:140 as a mass ratio, and the mixture was stirred until the powder of the acrylic resin was completely dissolved. Stirring was carried out at 2000 rpm for 2 hours using a rotary and revolutionary mixer ("Rentaro", manufactured by THINKY CORPORATION). Thus, a binder solution of Example 1 was obtained.

(Preparation of negative electrode slurry)

LAGP was used as a solid electrolyte. A carbon-based conductive agent was used as a conductive agent. The electrode active material, the solid electrolyte, and the conductive agent were prepared such that electrode active material : solid electrolyte : carbon-based conductive agent was 20:75:5 as a mass ratio. Powder of the electrode active material, powder of the solid electrolyte, and powder of the conductive agent were placed in a 58-mL container and stirred. Stirring was carried out 100 times by hand shaking. Thus, a negative electrode mixture of Example 1 was obtained. Then, the binder solution was added to the container such that negative electrode mixture : acrylic resin was 100:3.75 as a mass ratio. Furthermore, ethanol was added to the container such that negative electrode mixture : ethanol was 100:116.25 as a mass ratio, and the mixture was stirred. Stirring was carried out at 2000 rpm for 30 minutes using a rotary and revolutionary mixer ("Rentaro", manufactured by THINKY CORPORATION). Thus, a negative electrode slurry of Example 1 was obtained.

(Molded body for negative electrode pellets)

The negative electrode slurry was dried on a hot plate at a set temperature of 80°C. After confirming that the ethanol had been sufficiently removed from the negative electrode slurry, the dried film was roughly pulverized and was vacuum-dried at 80°C for 2 hours. The roughly pulverized product after vacuum-drying was placed in a mortar and was pulverized manually for 15 minutes to obtain a raw material powder for negative electrode pellets. Next, 122 mg of the raw material powder for negative electrode pellets was molded by a uniaxial pressing method using a press molding machine having a diameter of 10.5 mm. Thus, a molded body for negative electrode pellets of Example 1 was obtained. The pressing conditions were 276 MPa and 1 minute.

The molded body for negative electrode pellets was preliminarily fired using an electric furnace to remove the binder. The conditions for the preliminary firing were 350°C (ambient temperature), in atmospheric air, for 48 hours, no gas flow, and a temperature rise rate of 100°C/hour. Finally, the molded body for negative electrode pellets was normally fired using an electric furnace. The conditions for the normal firing were 650°C (ambient temperature), in a nitrogen atmosphere, for 2 hours, a gas flow of 1 L/min, and a temperature rise rate of 100°C/hour. Thus, negative electrode pellets of Example 1 were obtained. The dimensions of the negative electrode pellets of Example 1 were 9.51 mm in diameter and 0.63 mm in thickness. The mass was 113.9 mg.

<<Example 2>>

Negative electrode pellets of Example 2 were produced by the same method as that of Example 1, except that the electrode active material of Example 2 was used as a negative electrode active material. The dimensions of the negative electrode pellets of Example 2 were 9.50 mm in diameter and 0.63 mm in thickness. The mass was 113.2 mg.

<<Example 3>>

Negative electrode pellets of Example 3 were produced by the same method as that of Example 1, except that the electrode active material of Example 3 was used as a negative electrode active material. The dimensions of the negative electrode pellets of Example 3 were 9.48 mm in diameter and 0.63 mm in thickness. The mass was 113.6 mg.

<<Reference Example 1>>

Negative electrode pellets of Reference Example 1 were produced by the same method as that of Example 1, except that the electrode active material of Reference Example 1 was used as a negative electrode active material. The dimensions of the negative electrode pellets of Reference Example 1 were 9.51 mm in diameter and 0.63 mm in thickness. The mass was 113.8 mg.

<<Example 4>>

The electrode active material of Example 1 was used as a negative electrode active material. In the preparation of a negative electrode slurry, the electrode active material and the solid electrolyte were prepared such that electrode active material : solid electrolyte : carbon-based conductive agent was 35:64:1 as a mass ratio. Negative electrode pellets of Example 4 were produced by the same method as that of Example 1 except for these. The dimensions of the negative electrode pellets of Example 4 were 9.52 mm in diameter and 0.63 mm in thickness. The mass was 113.8 mg.

<<Example 5>>

Negative electrode pellets of Example 5 were produced by the same method as that of Example 4, except that the electrode active material of Example 2 was used as a negative electrode active material. The dimensions of the negative electrode pellets of Example 5 were 9.57 mm in diameter and 0.62 mm in thickness. The mass was 113.9 mg.

<<Example 6>>

Negative electrode pellets of Example 6 were produced by the same method as that of Example 4, except that the electrode active material of Example 3 was used as a negative electrode active material. The dimensions of the negative electrode pellets of Example 6 were 9.55 mm in diameter and 0.61 mm in thickness. The mass was 113.7 mg.

<<Reference Example 2>>

Negative electrode pellets of Reference Example 2 were produced by the same method as that of Example 4, except that the electrode active material of Reference Example 1 was used as a negative electrode active material. The dimensions of the negative electrode pellets of Reference Example 2 were 9.65 mm in diameter and 0.63 mm in thickness. The mass was 114.9 mg.

<<Reference Example 3>>

The electrode active material of Reference Example 1 was used as a negative electrode active material. In the preparation of a negative electrode slurry, the electrode active material, the solid electrolyte, and the conductive agent were prepared such that electrode active material : solid electrolyte : carbon-based conductive agent was 35:62:3 as a mass ratio. Negative electrode pellets of Reference Example 3 were produced by the same method as that of Example 1 except for these. The dimensions of the negative electrode pellets of Reference Example 3 were 9.82 mm in diameter and 0.65 mm in thickness. The mass was 113.8 mg.

<<Reference Example 4>>

The electrode active material of Reference Example 1 was used as a negative electrode active material. In the preparation of a negative electrode slurry, the electrode active material, the solid electrolyte, and the conductive agent were prepared such that electrode active material : solid electrolyte : carbon-based conductive agent was 35:60:5 as a mass ratio. Negative electrode pellets of Reference Example 4 were produced by the same method as that of Example 1 except for these. The dimensions of the negative electrode pellets of Reference Example 4 were 10.09 mm in diameter and 0.68 mm in thickness. The mass was 113.5 mg.

[Measurement of density of negative electrode pellets]

For the negative electrode pellets of Examples 1 to 6 and Reference Examples 1 to 4, the density of the negative electrode pellets was calculated from the dimensions and mass of the negative electrode pellets. The results are shown in Table 2.

[Measurement of porosity of negative electrode pellets]

For the negative electrode pellets of Examples 1 to 6 and Reference Examples 1 to 4, the porosity was obtained by the following method. First, the true density of each material used to produce the negative electrode pellets of Examples 1 to 6 and Reference Examples 1 to 4 was measured in advance. The porosity of the negative electrode pellets was calculated using the dimensions of the negative electrode pellets, the measured value of the true density, and the content ratio of each material. The negative electrode pellets were regarded as containing only the electrode active material, the solid electrolyte, and the carbon-based conductive agent. The true density was measured by a He displacement method using a pycnometer (Ultrapyc 5000, manufactured by Anton Paar). For LAGP (solid electrolyte), while an amorphous material is used as a starting raw material, it is difficult to evaluate the density after sintering. Therefore, the theoretical density was used as the true density of LAGP. The results are shown in Table 2.

[Table 2]

| | Negative electrode active material | Negative electrode pellet | | |
|---|---|---|---|---|
| | Ratio Rw of mass of carbon material (mass%) | Mass ratio electrode active material : solid electrolyte : carbon-based conductive agent | Density (g/cm$^3$) | Porosity (%) |
| Example 1 | 1.5 | 20:75:5 | 2.54 | 25.85 |
| Example 2 | 3.0 | 20:75:5 | 2.54 | 25.97 |
| Example 3 | 5.0 | 20:75:5 | 2.56 | 25.42 |
| Reference Example 1 | - | 20:75:5 | 2.54 | 25.95 |
| Example 4 | 1.5 | 35:64:1 | 2.56 | 28.36 |
| Example 5 | 3.0 | 35:64:1 | 2.55 | 28.66 |
| Example 6 | 5.0 | 35:64:1 | 2.60 | 27.28 |
| Reference Example 2 | - | 35:64:1 | 2.50 | 29.99 |
| Reference Example 3 | - | 35:62:3 | 2.30 | 35.07 |
| Reference Example 4 | - | 35:60:5 | 2.09 | 40.38 |

<<Discussion>>

The negative electrode pellets of Examples 1 to 3 and the negative electrode pellets of Reference Example 1 were different in the ratio Rw of the mass of the carbon material in the negative electrode active material. Although the amount of carbon in the electrode was increased with the increase in the ratio Rw of the mass of the carbon material in the negative electrode active material, the negative electrode pellets of Examples 1 to 3 and the negative electrode pellets of Reference Example 1 showed approximately equal values in density and porosity. This is thought to be because, in the negative electrode pellets of Examples 1 to 3, the sinterability of the negative electrode was maintained due to a good contact interface being formed between the negative electrode active material and the solid electrolyte. The negative electrode pellets of Examples 4 to 6 and the negative electrode pellets of Reference Example 2 were different in the ratio Rw of the mass of the carbon material in the negative electrode active material. Although the amount of carbon in the electrode was increased with the increase in the ratio Rw of the mass of the carbon material in the negative electrode active material, the negative electrode pellets of Examples 4 to 6 and the negative electrode pellets of Reference Example 2 showed approximately equal values in density and porosity. This is thought to be because, in the negative electrode pellets of Examples 4 to 6, the sinterability of the negative electrode was maintained due to a good contact interface being formed between the negative electrode active material and the solid electrolyte. From these results, it can be found that the carbon material placed in the pores has little influence on the sinterability of the negative electrode. From the comparison of Reference Examples 2 to 4, it can be found that the sinterability deteriorates when the amount of LAGP is decreased and the amount of the carbon-based conductive agent is increased.

[Production of two-layer pellets]

<<Examples 1 to 6, Reference Examples 1 to 4>>

Two-layer pellets of Examples 1 to 6 and Reference Examples 1 to 4 were produced using the raw material powders for negative electrode pellets of Examples 1 to 6 and Reference Examples 1 to 4. The two-layer pellets were composed of negative electrode pellets and solid electrolyte pellets.

(Preparation of solid electrolyte slurry)

LAGP was used as a solid electrolyte. Powder of the solid electrolyte was placed in a 6-mL container. A binder solution was added to the container such that powder of solid electrolyte : acrylic resin was 100:3.75 as a mass ratio. Furthermore, ethanol was added to the container such that powder of solid electrolyte : ethanol was 100:116.25 as a mass ratio, and the mixture was stirred. Stirring was carried out at 2000 rpm for 30 minutes using a rotary and revolutionary mixer ("Rentaro", manufactured by THINKY CORPORATION). Thus, a solid electrolyte slurry was obtained.

(Molded body for two-layer pellets)

The solid electrolyte slurry was dried on a hot plate at a set temperature of 80°C. After confirming that the ethanol had been sufficiently removed from the solid electrolyte slurry, the dried film was roughly pulverized and was vacuum-dried at 80°C for 2 hours. The roughly pulverized product after vacuum-drying was placed in a mortar and was pulverized manually for 15 minutes to obtain a raw material powder for solid electrolyte pellets.
Next, 15 mg of the raw material powder for negative electrode pellets was charged into a tablet molding machine having a diameter of 8 mm and was pressurized by hand for 1 second. Next, 50 mg of the raw material powder for solid electrolyte pellets was charged and was pressurized by a uniaxial pressure method. Thus, a molded body, for two-layer pellets, composed of a molded body for negative electrode pellets and a molded body for solid electrolyte pellets was obtained. The pressurization conditions were 276 MPa and 1 minute.
The molded body for two-layer pellets was preliminarily fired using an electric furnace to remove the binder. The conditions for the preliminary firing were 350°C (ambient temperature), in atmospheric air, for 48 hours, no gas flow, and a temperature rise rate of 100°C/hour. Finally, the molded body for two-layer pellets was normally fired using an electric furnace. The conditions for the normal firing were 650°C (ambient temperature), in a nitrogen atmosphere, for 2 hours, a gas flow of 1 L/min, and a temperature rise rate of 100°C/hour. Thus, two-layer pellets of Examples 1 to 6 and Reference Examples 1 and 2 were obtained. As for Reference Examples 3 and 4, the sinterability of the negative electrode pellets, specifically the shrinkage rate, deteriorated with the increase in the addition amount of the carbon-based conductive agent, and warpage occurred in the two-layer pellets due to the difference in shrinkage rate with the solid electrolyte pellets. Therefore, two-layer pellets capable of being charged and discharged could not be produced.

[Evaluation of charge-discharge characteristics of negative electrode half cell]

Using the two-layer pellets of Examples 1 to 6 and Reference Examples 1 and 2, a charge-discharge test was conducted for negative electrode half cells by the following method. In each negative electrode half cell, the side where Li is inserted corresponds to discharging (charging in the battery), and the side where Li is released corresponds to charging (discharging in the battery), so that an initial charge capacity $C_{11}$ of the negative electrode half cell corresponds to the initial discharge capacity of the battery, and an initial discharge capacity $C_{10}$ of the negative electrode half cell corresponds to the initial charge capacity of the battery.

First, an Au thin film having a thickness of 290 nm was formed on the surface on the negative electrode pellet side of the two-layer pellets by sputtering, and then the two-layer pellets were placed in a vacuum dryer and dried at 80°C for 1 hour. Next, a Li metal foil having a thickness of 300 $\mu$m was placed on the surface on the solid electrolyte pellet side of the two-layer pellets. A solid polymer electrolyte membrane was placed such that the Au thin film, the two-layer pellets, the solid polymer electrolyte membrane, and the Li metal foil were arranged in this order, to obtain a laminate. The used solid polymer electrolyte membrane was a LiTFSI-PEO membrane. The molar ratio of PEO : LiTFSI in the LiTFSI-PEO membrane was 18:1. The laminate was placed in a sealed two-electrode cell (HS flat cell, manufactured by Hohsen Corp.) to obtain a negative electrode half cell. In order to avoid pellet cracking, the spring constant in the lamination direction of the laminate was selected as 200 gf/mm.

Next, a charge-discharge test was conducted for the negative electrode half cell in a constant current constant voltage (CCCV) mode at 60°C, and a charge/discharge curve for the first cycle was obtained. The half cell was discharged at a constant current of 0.01 C until the voltage reached 1.5 V, and discharged at a constant voltage of 1.5 V for 5 hours. The half cell was charged at a constant current of 0.01 C until the voltage reached 3 V, and then charged at a constant voltage of 3 V for 5 hours. An electrochemical evaluation apparatus (VSP-300, manufactured by Biologic Science Instruments SAS) was used for charging and discharging. FIG. 8 shows the charge/discharge curves for the first cycle of the negative electrode half cells of Examples 1 to 3 and Reference Example 1 in a superimposed manner. The charge capacity and the discharge capacity of the negative electrode half cell obtained from the charge/discharge curve for the first cycle are referred to as initial charge capacity $C_{11}$ and initial discharge capacity $C_{10}$, respectively. The results are shown in Table 3.

[Table 3]

| | Negative electrode active material | Negative electrode pellets | Negative electrode half cell |
|---|---|---|---|
| | Ratio Rw of mass of carbon material (mass%) | Mass ratio electrode active material : solid electrolyte : carbon-based conductive agent | Initial charge capacity C11 (mAh/g-TiO$_2$) |
| Example 1 | 1.5 | 20:75:5 | 155.1 |
| Example 2 | 3.0 | 20:75:5 | 153.4 |
| Example 3 | 5.0 | 20:75:5 | 151.4 |
| Reference Example 1 | - | 20:75:5 | 143.3 |
| Example 4 | 1.5 | 35:64:1 | 150.7 |
| Example 5 | 3.0 | 35:64:1 | 147.3 |
| Example 6 | 5.0 | 35:64:1 | 146.8 |
| Reference Example 2 | - | 35:64:1 | 141.7 |

<<Discussion>>

The negative electrode half cells of Examples 1 to 3 and the negative electrode half cell of Reference Example 1 had the same ratio of the mass of the carbon-based conductive agent used for the negative electrode pellets. However, the negative electrode half cells of Examples 1 to 3 had an improved initial charge capacity $C_{11}$ compared to the negative electrode half cell of Reference Example 1. The negative electrode half cells of Examples 4 to 6 and the negative electrode half cell of Reference Example 2 had the same ratio of the mass of the carbon-based conductive agent used for the negative electrode pellets. However, the negative electrode half cells of Examples 4 to 6 had an improved initial charge capacity $C_{11}$ compared to the negative electrode half cell of Reference Example 2. This is thought to be because, due to the carbon material existing inside the pores of the negative electrode active material, many electron conduction paths were formed between the oxide particles and the carbon material, and the electron-conducting properties of the electrode active material were improved.

[Production of two-layer pellets]

<<Reference Example 5>>

The electrode active material of Reference Example 1 was used as a negative electrode active material. In the preparation of a negative electrode slurry, the electrode active material, the solid electrolyte, and the conductive agent were prepared such that electrode active material : solid electrolyte : carbon-based conductive agent was 20:75:5 as a mass ratio. Two-layer pellets of Reference Example 5 were produced by the same method as that of Reference Example 1 except for these.

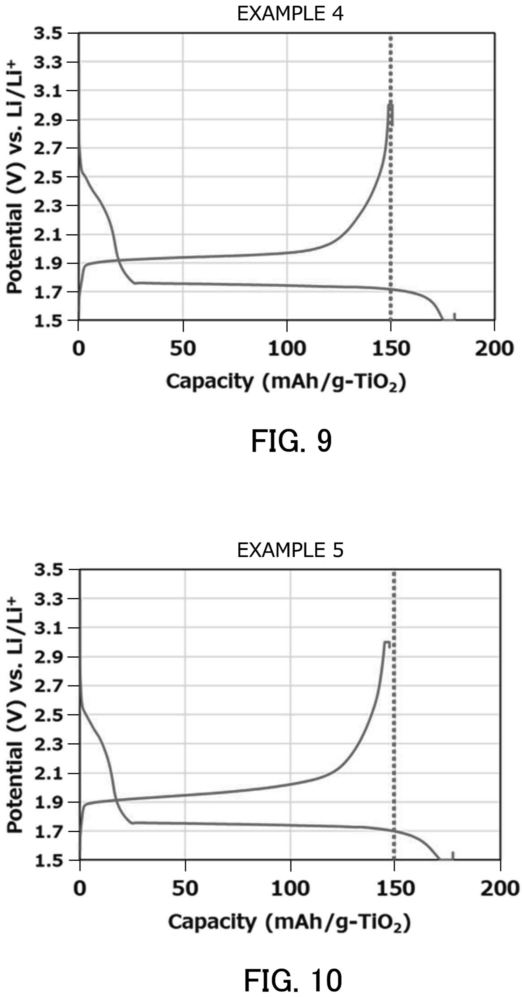

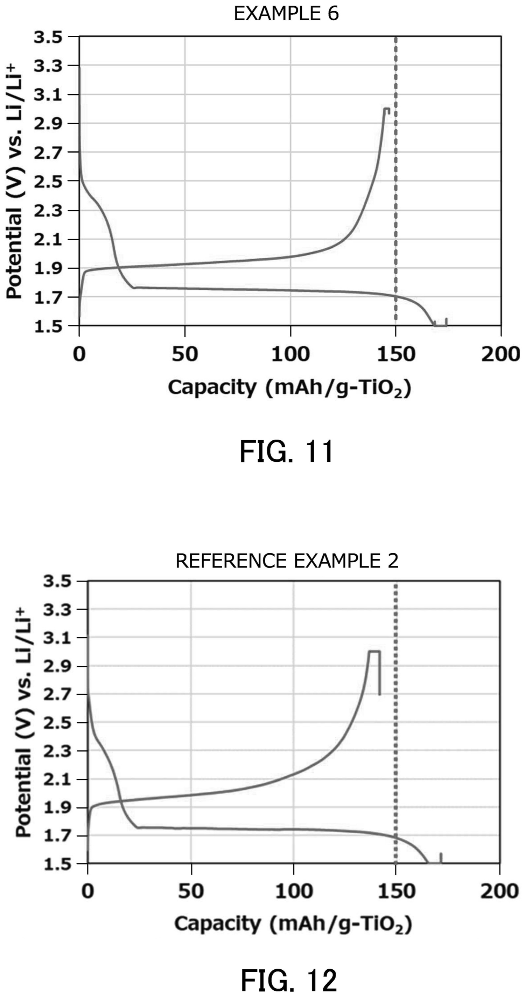

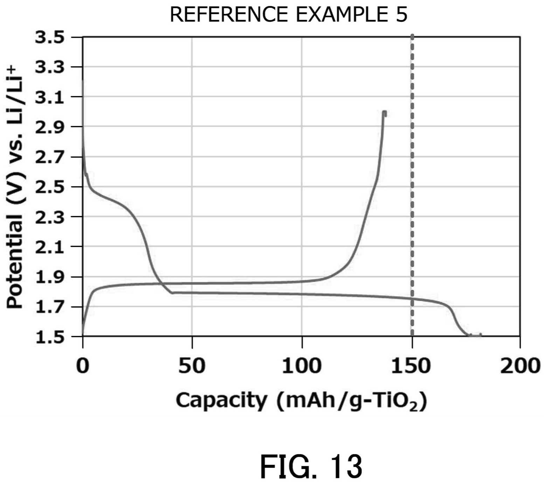

Next, using the two-layer pellets of Examples 4 to 6 and Reference Examples 2 and 5, a charge-discharge test was conducted for negative electrode half cells by the same method as described above. FIG. 9 to FIG. 13 show the charge/discharge curves for the first cycle of the negative electrode half cells of Examples 4 to 6 and Reference Examples 2 and 5. Each line shown by dashed lines in FIG. 9 to FIG. 13 is a line indicating the standard initial charge capacity of a liquid battery in which an electrolytic solution is used. A shoulder capacity during discharge of the negative electrode half cell obtained from the charge/discharge curve for the first cycle is referred to as shoulder capacity $C_S$ during initial discharge. A value calculated as $100 \times C_{11}/C_{10}$ is referred to as initial charge-discharge efficiency. The results are shown in Table 4. It has been found that the shoulder capacity $C_S$ is caused by diffusion of Ti element to the LAGP side and formation of an LAGTP layer at the interface due to the reaction of LAGP (solid electrolyte) and $TiO_2$ (oxide particles) during normal firing. In addition, it has been found that when Ti element is incorporated into LAGP, a shift of the lower potential window to a potential region of not less than the driving potential of $TiO_2$ occurs, so that the reductive decomposition of the electrolyte layer occurs and the efficiency decreases. That is, the occurrence of the shoulder capacity $C_S$ indicates that the LAGTP layer is formed at the interface between LAGP and the $TiO_2$ layer, and the large shoulder capacity $C_S$ indicates that the amount of formation of this LAGTP layer is increased. Therefore, it can be said that reducing the shoulder capacity $C_S$ is desirable for improving the initial charge-discharge efficiency. Although it has been known from the examination so far that the existence of the carbon material promotes the reaction between LAGP and $TiO_2$, it can be confirmed that increasing the addition amount of the carbon-based conductive agent increases the shoulder capacity $C_S$, for example, as confirmed in Reference Example 5. In this study, it was found that by using the electrode active material having a structure in which the carbon material is placed inside the pores, even when the total carbon amount in the electrode is increased, an increase in the shoulder capacity $C_S$ due to the increase in the total carbon amount can be avoided.

[Table 4]

|  | Negative electrode active material | Negative electrode pellets |
|---|---|---|
|  | Ratio Rw of mass of carbon material (mass%) | Mass ratio electrode active material : solid electrolyte : carbon-based conductive agent |
| Example 4 | 1.5 | 35:64:1 |
| Example 5 | 3.0 | 35:64:1 |
| Example 6 | 5.0 | 35:64:1 |
| Reference Example 2 | - | 35:64:1 |
| Reference Example 5 | - | 20:75:5 |

[Table 4] (cont.)

|  | Negative electrode half cell | | | |
|---|---|---|---|---|
|  | Shoulder capacity $C_S$ during initial discharge (mAh/g-$TiO_2$) | Initial discharge capacity $C_{10}$ (mAh/g-$TiO_2$) | Initial charge capacity $C_{11}$ (mAh/g-$TiO_2$) | Initial charge-discharge efficiency $100 \times C_{11}/C_{10}$ (%) |
| Example 4 | 24.5 | 180.7 | 150.7 | 83.4 |
| Example 5 | 25.2 | 177.5 | 147.3 | 83.0 |
| Example 6 | 24.7 | 173.9 | 146.8 | 84.4 |
| Reference Example 2 | 24.8 | 171.3 | 141.7 | 82.7 |

(continued)

| | Negative electrode half cell | | | |
|---|---|---|---|---|
| | Shoulder capacity $C_S$ during initial discharge (mAh/g-TiO$_2$) | Initial discharge capacity $C_{10}$ (mAh/g-TiO$_2$) | Initial charge capacity $C_{11}$ (mAh/g-TiO$_2$) | Initial charge-discharge efficiency $100 \times C_{11}/C_{10}$ (%) |
| Reference Example 5 | 41.9 | 181.8 | 138.5 | 76.2 |

<<Discussion>>

From the comparison between the initial charge-discharge efficiency of Examples 4 to 6 and the initial charge-discharge efficiency of Reference Examples 2 and 5, it was found that when the carbon material is placed inside the pores of the negative electrode active material, the interface where LAGP (solid electrolyte) and the carbon-based conductive agent are in contact with each other can be reduced compared to the case where the carbon material is added as a conductive agent, and thus a decrease in the initial charge-discharge efficiency is suppressed.

[Evaluation of cycle characteristics of negative electrode half cell]

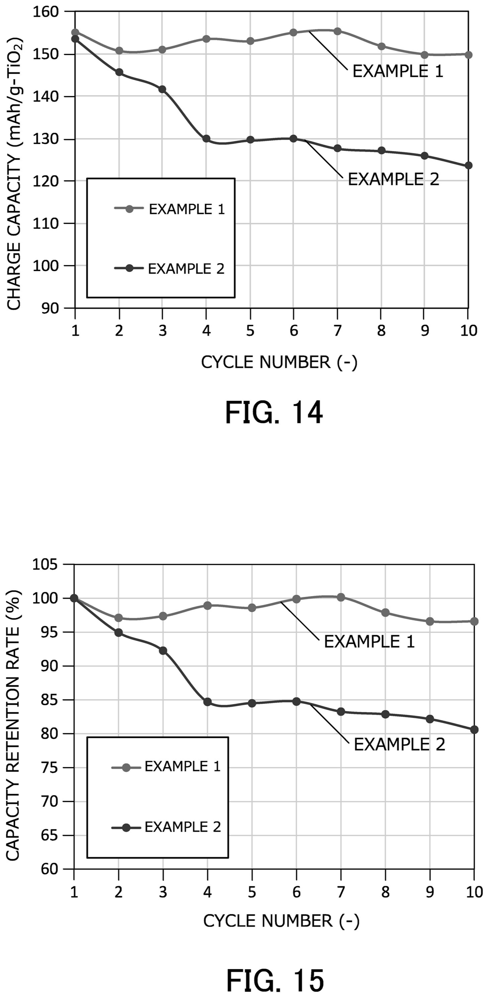

Using the two-layer pellets of Examples 1 and 2, a charge-discharge test was conducted for negative electrode half cells by the same method as described above until the tenth cycle. A charge capacity $C_A$ for the tenth cycle was obtained from the charge/discharge curve for the tenth cycle. A value calculated as $100 \times C_A/C_{11}$ is referred to as capacity retention rate for the tenth cycle. A value calculated as the average value of the charge-discharge efficiency {(discharge capacity/charge capacity) $\times$ 100} for the respective cycles from the fifth cycle to the tenth cycle is referred to as charge-discharge efficiency (%) for the fifth to tenth cycles. The results are shown in Table 5. FIG. 14 shows the relationship between the cycle number and the charge capacity of each of the negative electrode half cells of Examples 1 and 2. In each negative electrode half cell, the side where Li is released corresponds to charging (discharging in the battery). FIG. 15 shows the relationship between the cycle number and the capacity retention rate of each of the negative electrode half cells of Examples 1 and 2.

[Table 5]

| | Negative electrode active material | Negative electrode half cell | | | |
|---|---|---|---|---|---|
| | Volume occupancy ratio Rv of carbon material (vol%) | Initial charge capacity $C_{11}$ (mAh/g-TiO$_2$) | Charge capacity $C_A$ for tenth cycle (mAh/g-TiO$_2$) | capacity retention rate for tenth cycle $100 \times C_A/C_{11}$ (%) | Charge-discharge efficiency for fifth to tenth cycles (%) |
| Example 1 | 8.45 | 155.1 | 149.8 | 96.6 | 98.1 |
| Example 2 | 33.80 | 153.4 | 123.6 | 80.6 | 96.8 |

<<Discussion>>

The negative electrode half cell of Example 1 and the negative electrode half cell of Example 2 were different in the volume occupancy ratio Rv of the carbon material with respect to the pores in the negative electrode active material used for the negative electrode pellets. From the results shown in Table 5, FIG. 14, and FIG. 15, it was found that when the volume occupancy ratio Rv is 30 vol% or less, it is indicated that the cycle characteristics tend to improve.

INDUSTRIAL APPLICABILITY

The solid electrolyte of the present disclosure can be used, for example, for in-vehicle lithium-ion secondary batteries, etc.

**Claims**

1. An electrode active material comprising:

an oxide particle containing titanium and not containing lithium; and
a carbon material, wherein
the oxide particle has a plurality of pores having an average pore diameter of 50 nm or more and 200 nm or less, and
the carbon material exists inside the pores.

2. The electrode active material according to claim 1, wherein the oxide particle is a secondary particle including a plurality of primary particles.

3. The electrode active material according to claim 2, wherein the secondary particle is a sintered body of the plurality of primary particles.

4. The electrode active material according to claim 2, wherein a median diameter of the plurality of primary particles is 50 nm or more and 500 nm or less.

5. The electrode active material according to claim 1, wherein a median diameter of the oxide particle is more than 2 $\mu$m and less than 7 $\mu$m.

6. The electrode active material according to claim 1, wherein a pore volume of the pores in the electrode active material per unit mass is 0.01 mL/g or more and 0.5 mL/g or less.

7. The electrode active material according to claim 1, wherein a volume occupancy ratio of the carbon material with respect to the pores is 0.5 vol% or more and 80 vol% or less.

8. The electrode active material according to claim 1, wherein the plurality of pores include a communication hole.

9. The electrode active material according to claim 1, wherein a ratio $I_D/I_G$ of a peak intensity $I_D$ at 1360 cm$^{-1}$ to a peak intensity $I_G$ at 1580 cm$^{-1}$ in a Raman spectrum of the electrode active material is 0.6 or more and 1.4 or less.

10. The electrode active material according to claim 1, wherein the oxide particle contains titanium oxide.

11. An electrode comprising:

the electrode active material according to any one of claims 1 to 10; and
a solid electrolyte in contact with the electrode active material.

12. The electrode according to claim 11, wherein the solid electrolyte has a composition of $Li_{1+x}Al_xGe_{2-x}(PO_4)_3$ ($0 \leq x \leq 2$).

13. A battery comprising:

a positive electrode;
a negative electrode; and
an electrolyte layer placed between the positive electrode and the negative electrode, wherein
the positive electrode or the negative electrode includes the electrode according to claim 11.

14. The battery according to claim 13, wherein the negative electrode includes the electrode.

10

1sa
1sb

2

1

1s

11

FIG. 1

1

11

11

1s

FIG. 2

FIG. 3

FIG. 4

FIG. 5

FIG. 6

FIG. 7

FIG. 8

EXAMPLE 4

FIG. 9

EXAMPLE 5

FIG. 10

EXAMPLE 6

FIG. 11

REFERENCE EXAMPLE 2

FIG. 12

REFERENCE EXAMPLE 5

FIG. 13

FIG. 14

FIG. 15

# EP 4 723 220 A1

## INTERNATIONAL SEARCH REPORT

International application No.

**PCT/JP2024/014105**

### A. CLASSIFICATION OF SUBJECT MATTER

*H01M 4/48*(2010.01)i; *H01M 4/36*(2006.01)i; *H01M 4/62*(2006.01)i
FI: H01M4/48: H01M4/62 Z; H01M4/36 A

According to International Patent Classification (IPC) or to both national classification and IPC

### B. FIELDS SEARCHED

Minimum documentation searched (classification system followed by classification symbols)

H01M4/00-4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2017-152114 A (TAIHEIYO CEMENT CORPORATION) 31 August 2017 (2017-08-31) paragraphs [0014]-[0044], [0054], [0055], table 1, fig. 1, 2 | 1-9 |
| A | | 10-14 |
| Y | WO 2018/212038 A1 (NGK INSULATORS LTD.) 22 November 2018 (2018-11-22) paragraphs [0005]-[0008], [0013], [0015], [0021], [0022], [0026], [0034], [0038], table 1, examples 1-17 | 1-9 |
| A | | 10-14 |
| Y | JP 2018-160432 A (TAIHEIYO CEMENT CORPORATION) 11 October 2018 (2018-10-11) paragraphs [0005], [0017] | 1-9 |
| A | | 10-14 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 May 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/014105** |

| Patent document cited in search report | | | Publication date (day/month/year) | Patent family member(s) | Publication date (day/month/year) |
| --- | --- | --- | --- | --- | --- |
| JP | 2017-152114 | A | 31 August 2017 | (Family: none) | |
| WO | 2018/212038 | A1 | 22 November 2018 | US 2020/0075933 A1<br>paragraphs [0005]-[0015],<br>[0020], [0022], [0028], [0029],<br>[0033], [0041], [0045], table 1,<br>examples 1-17<br>EP 3627595 A1<br>CN 110612623 A<br>KR 10-2020-0007770 A | |
| JP | 2018-160432 | A | 11 October 2018 | (Family: none) | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 5400607 B